# EUROPÄISCHE PATENTANMELDUNG

(11) **EP 0 877 214 A2**
(43) Veröffentlichungstag der Anmeldung: **11.11.1998**
(21) Anmeldenummer: 98108172.2
(22) Anmeldetag: 05.05.1998
(51) Int. Cl.: F24J 2/46

(54) **Sonnenkollektor**

(30) Priorität: 06.05.1997 DE 19719171
(71) Anmelder: thermosolar TSI AG, 8048 Zürich (CH)
(72) Erfinder: Kellner, Bernd, 93161 Eilsbrunn-Sinzing (DE)
(74) Vertreter: WILHELMS, KILIAN & PARTNER Patentanwälte

(57) **Zusammenfassung**

Gegenstand der Erfindung ist ein Sonnenkollektor mit einer Wanne (1) aus Blech, wobei die Wanne einen Rand (2) aufweist, auf welchem unter Zwischenlage einer Dichtungseinrichtung eine die Wanne verschließende strahlungsdurchlässige Scheibe (3) aufliegt, und wobei die Dichtungseinrichtung einen Dichtstreifen (5) aus einem geschlossenzelligen plastischen Material aufweist.

## Beschreibung

Die Erfindung betrifft einen Sonnenkollektor mit einer Wanne aus Blech, wobei die Wanne einen Rand aufweist, auf welchem unter Zwischenlage einer Dichtungseinrichtung eine die Wanne verschließende strahlungsdurchlässige Scheibe aufliegt.

Ein Sonnenkollektor dieser Art ist bekannt (DE-OS 36 11 764). Bei dem bekannten Sonnenkollektor ist die Dichtungseinrichtung durch eine einfache Rundschnurdichtung gebildet, die in einer dem Dichtring angepaßten Vertiefung des Wannenrands liegt.

Blechwanne und Scheibe des Sonnenkollektors unterliegen Relativbewegungen, sei es bei dem Vakuumkollektor durch den im Kollektor herrschenden Unterdruck, sei es bei einem gasgefüllten Kollektor aufgrund des von der Temperatur abhängigen Gasdrucks im Kollektor.

Die bekannte Dichteinrichtung in Form eines einfachen Dichtrings ist daher nicht voll zufriedenstellend, weil sie Leckagen unter diesen Umständen nicht zuverlässig verhindern kann.

Aufgabe der Erfindung ist es daher, einen Sonnenkollektor der eingangs genannten Art zu schaffen, bei dem die Dichtwirkung zwischen Wanne und Scheibe verbessert ist.

Diese Aufgabe wird erfindungsgemäß durch einen Sonnenkollektor mit den Merkmalen des Patentanspruchs 1 gelöst.

Durch die Plastizität der Dichtung wird eine gute Abdichtung zwischen Wannenrand und Scheibe unabhängig von den Druckverhältnissen im Kollektor, also sowohl bei Unterdruck, wie beim Vakuumkollektor, als auch bei einem Überdruck, wie er bei gasgefüllten Kollektoren auftreten kann, erreicht.

Für Überdruckverhältnisse, wird die Dichtung weiter verbessert, wenn der Dichtstreifen doppeltklebend ist. Die Geschlossenzelligkeit des Materials sorgt bei der vorhandenen Plastizität dafür, daß unbelastet eine gewisse Rückstellung des Dichtstreifens in die Ausgangsform erfolgt.

Ein besonders geeigneter Dichtstreifen wird als doppeltklebendes Band von 3M Company unter der Bezeichnung SCOTCH™ VHB™ Acrylic Foam vertrieben, bei dem der Klebstoff ein Acrylat mit geschlossenzelligem Klebstoff-Kern ist.

Eine vorteilhafte Weiterbildung der Erfindung, insbesondere bei Vakuumkollektoren, ist Gegenstand von Anspruch 3. Die verhältnismäßig harte elastische Dichtung in Form eines Dichtrings aus vorzugsweise Neoprene® oder Viton® wirkt als Auflager, das ein vollständiges Zusammendrücken des inneren Dichtstreifens auch dann verhindert, wenn sich die Abdeckscheibe nach innen durchwölbt.

Nach einer weiteren bevorzugten Ausgestaltung der Erfindung gemäß Anspruch 4 befindet sich außenseitig eine plastische Dichtung, die mit steigender Temperatur zu fließen beginnt und auf diese Weise in Hohlräume verläuft, die sich infolge thermischer Verformungen zwischen der harten Dichtung und Wannenrand bzw. Abdeckscheibe gegebenenfalls auftun.

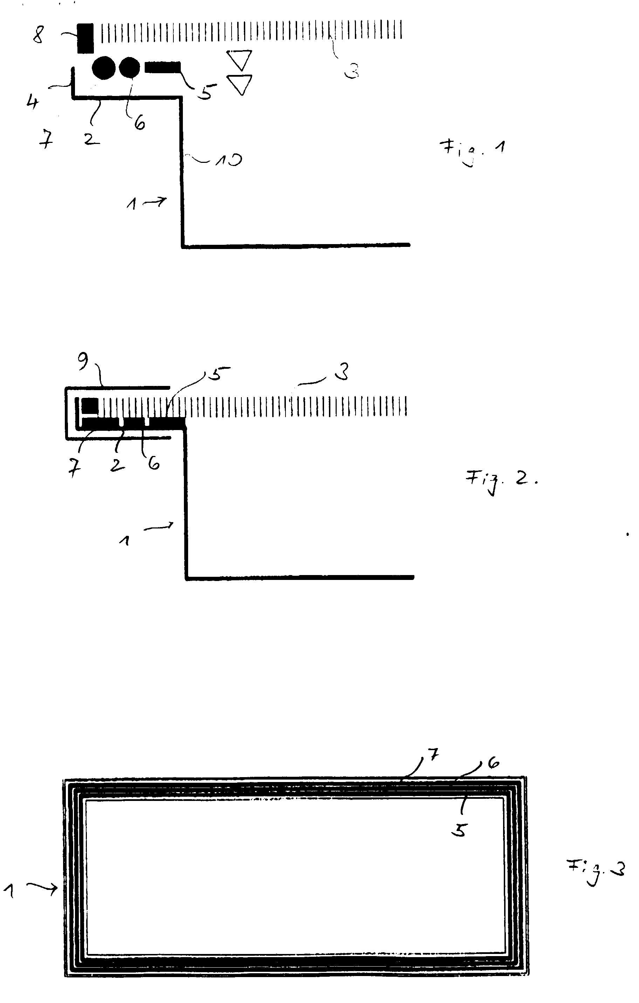

Eine Ausführungsform der Erfindung wird nun anhand der beigefügten Zeichnung beschrieben. Auf dieser zeigt
Fig. 1 eine schematische Teilschnittansicht von Wanne, Dichtungseinrichtung und Scheibe vor Auflegen der Scheibe,
Fig. 2 eine der Fig. 1 entsprechende Darstellung nach Auflegen der Scheibe, und
Fig. 3 Wanne mit Dichteinrichtung in der Draufsicht.

Gemäß den Figuren weist ein Sonnenkollektor eine Blechwanne 1, vorzugsweise aus Aluminium, auf. Die Blechwanne 1 weist einen gegenüber den Seitenwänden 10 der Wanne abgewinkelten Rand 2 auf, der im wesentlichen parallel zu einer auf diesem über eine Dichtungseinrichtung aufliegenden strahlungsdurchlässigen Scheibe 3 verläuft. Der Rand 2 ist außen bei 4 nochmals abgewinkelt, so daß sich eine Umschließung für die aufgelegte Scheibe 3 ergibt.

Die Dichtungseinrichtung weist randinnenseitig zunächst eine weichelastische Dichtung 5, vorzugsweise in Form eines Dichtungsstreifens auf, der durch ein plastisches, geschlossenzelliges, doppeltklebendes Band gebildet ist. Ein besonders geeignetes Klebeband wird von der 3M Company unter der Produktbezeichnung SCOTCH™ VHB™ Acrylic Foam hergestellt.

An diese innere weichelastische Dichtung schließt außen eine verhältnismäßig harte elastische Dichtung 6, vorzugsweise in Form eines Rundschnurrings an, der unter Preßkräften verhältnismäßig wenig verformbar ist. Neoprene® oder Viton® sind geeignete Materialien.

Außen schließt an die harte Dichtung 6 eine plastisch verformbare Dichtung 7 an, deren Plastizität mit steigender Temperatur zunimmt und die schließlich zu fließen beginnt. Besonders geeignet ist ein Material auf Butylbasis.

Diese plastische Dichtung 7 ragt seitlich über die Scheibe 3 hinaus und füllt den Winkelbereich zwischen dem scheibenparallelen Teil des Randes 2 und dem hochgestellten Ende 4 des Randes 2 neben dem Scheibenrand zum Teil aus.

In den freibleibenden Bereich an dieser Stelle oberhalb der Dichtung 7 wird bevorzugt ein Füllmaterial 8, vorzugsweise aus Siliconkautschuk, eingefügt. Ein Kantenschutz 9 in Form eines Rahmens wird schließlich über den Wannenrand nach Aufsetzen der Abdeckscheibe 3 geschoben.

Nicht dargestellt in der Zeichnung ist der Absorber des Kollektors, der sich in der Wanne 1 unterhalb der Abdeckscheibe 3 befindet.

Beim Evakuieren des Kollektors und auch bei Temperaturänderungen kommt es zu Verschiebungen der Relativlagen zwischen Wanne und Abdeckscheibe. Die mittlere hartelastische Dichtung 6 liefert dabei einen Angelpunkt, um den die sich bei Evakuierung nach innen biegende Abdeckscheibe 3 und die ebenfalls sich verformende Wanne 1 drehen können. Die innere weichelastische Dichtung 5, die an die Kante zwischen Rand 2 und Seitenwand 10 der Wanne 1 heranreicht, verhindert dabei eine direkte Berührung von Abdeckscheibe 3 und Wanne 1. Die äußere elastische, und schließlich auch fließende, Dichtung sorgt für zuverlässige Dichtwirkung auch dann, wenn sich im Zuge eines Durchbiegens der Abdeckscheibe in der Mitte nach innen ihre Außenkante vom Rand 2 der Wanne entfernt. Dies gilt auch bei möglicherweise auftretenden Scherbewegungen.

## Patentansprüche

1. Sonnenkollektor mit einer Wanne (1) aus Blech, wobei die Wanne einen Rand (2) aufweist, auf welchem unter Zwischenlage einer Dichtungseinrichtung eine die Wanne verschließende strahlungsdurchlässige Scheibe (3) aufliegt, dadurch gekennzeichnet, daß die Dichtungseinrichtung einen Dichtstreifen (5) aus einem geschlossenzelligen plastischen Material aufweist.

2. Sonnenkollektor nach Anspruch 1, dadurch gekennzeichnet, daß der Dichtstreifen (5) doppeltklebend ist.

3. Sonnenkollektor nach Anspruch 1 oder 2, dadurch gekennzeichnet, daß der Dichtstreifen (5) außenseitig von einer verhältnismäßig harten elastischen Dichtung (6) umgeben ist.

4. Sonnenkollektor nach Anspruch 3, dadurch gekennzeichnet, daß die verhältnismäßig harte elastische Dichtung außenseitig von einer mit steigender Temperatur fließenden plastischen Dichtung (7) umgeben ist.
